# EUROPEAN PATENT APPLICATION

(11) **EP 0 916 377 A2**
(43) Date of publication of application: **19.05.1999**
(21) Application number: 98309292.5
(22) Date of filing: 13.11.1998
(51) Int. Cl.: B01D 19/04

(54) **Foam control compositions**

(30) Priority: 14.11.1997 GB 9724070
(71) Applicant: DOW CORNING S.A., B-7180 Seneffe (BE)
(72) Inventor: l'Hostis, Jacqueline, 7830 Silly (BE); Renauld, Franck, 1325 Chaumont Gistoux (BE)
(74) Representative: Vandamme, Luc Johan Roger, Dr.

(57) **Abstract**

Disclosed is a foam control composition comprising an organosiloxane in a liquid organic diluent. The foam control composition is characterized in that it contains at least 0.1 weight % of the organosiloxane and the organosiloxane has a weight-average molecular weight of at least 1,800,000 and a polydispersity of not more than 4. These materials are especially useful for restricting the formation of foam during the separation of gas from a mixture of crude oil and gas.

## Description

This invention relates to a foam control composition and a method for restricting the formation of foam formed during the separation of gas from a mixture of crude oil and gas.

Crude oil, in its normal high pressure state, contains dissolved gases such as methane and other alkanes. When the crude oil is extracted in a gas-oil separator, however, the low pressure environment of the separator causes liberation of dissolved gases and violent foaming of the oil. As a result of this gas disengagement, two phases are formed, one gaseous phase comprising natural gas and foam and one liquid phase comprising crude oil.

The foam formed during gas disengagement may lead to a loss of crude oil when gas is taken from the top of the separator. To solve this problem, it is well known to use antifoams to restrict the formation of foam.

EP 0181181 describes the use of a fluoro-silicone fluid as a foam suppressant in crude oil processing. The reference describes the use of such materials at both the wellhead and in refinery operations. These materials, however, are very expensive.

It is also known that certain foams termed micro-gas dispersions can be produced from crude oil when methane has been partly removed. Such foams are known to be stable and, thus, difficult to break.

EP 0091257 describes a material useful for breaking foams formed during crude oil processing, especially micro-gas dispersions. The material described therein comprises a linear polydimethyl siloxane with a weight-average molecular weight M(w) of 100,000 to 300,000 These linear polydimethylsiloxanes are taught to have a viscosity of between 500,000 and 1,000,000 mm²/sec at 25°C and, thus, are not easily dispersed in solvents. The reference also teaches that fractions of such polymers with excessive molecular weight, such as greater than 1,750,000, impair effectiveness of the materials because of their reduced dispersability.

EP 0163541 and EP 0270273 both describe methods for producing complex foam control compositions comprising a reaction product of several components, one of which is a polydiorganosiloxane having a viscosity of "several million centistokes". The maximum viscosity discussed in the document for this polymer being 50 million centistokes which equates to a molecular weight in the region of 315000.

US 3700587 relates to a method of inhibiting the foam produced during the conversion of residual petroleum into coke by the delayed coking process and involves the introduction of from 0.005 to about 100 p.p.m. of a polydimethylsiloxane having a viscosity of at least 150 000 and preferably up to 3,000,000 centistokes. A polydimethyl siloxane having a viscosity of 3,000,000 has a molecular weight in the region of 215000.

It is an object of the present invention to provide a composition containing a high molecular weight polydimethylsiloxane that controls the foam formed during crude oil processing.

According to one aspect of the present invention there is provided a foam control composition comprising an organosiloxane in a liquid organic diluent, characterized in that the foam control composition contains at least 0.1 weight % of the organosiloxane and the organosiloxane has a weight-average molecular weight of at least 1,800,000 and a polydispersity of not more than 4.

The organosiloxanes used in the present invention are known in the art for uses other than as crude oil antifoams. Generally, they have the structure represented by the following formula (1):

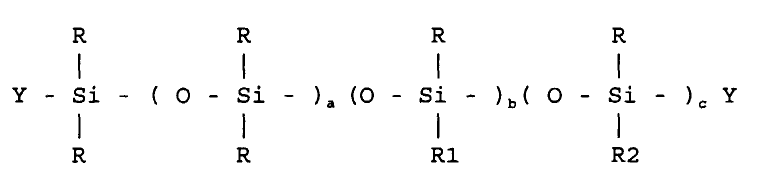

In this formula, R is independently a hydrocarbon group, preferably having 1-20 carbon atoms. These include, for example, monovalent alkyl groups such as methyl, ethyl, propyl and butyl, alkenyl groups such as vinyl and hexenyl, or aryl group such as phenyl. R1 in this formula is independently a group R or a hydroxyl group. R2 in this formula is independently a C9-35 alkyl group or a carbonoxy group such as methoxy, ethoxy, 2-methoxyethoxy, acetoxy, glycidoxy propyl, and epoxy group. Y in this formula is independently a group R or a hydroxyl group. a, b and c in this formula independently have a value of 0 or are positive integers, provided that at least one of a, b, and c is an integer and the value of a, b and c is such that the organosiloxane has a weight-average molecular weight of at least 1,800,000 and a polydispersity not more than 4.

The above organosiloxanes are primarily linear materials. A small amount of branching (e.g. up to 1 or 2%) may, however, be present.

Preferred organosiloxanes herein are those in which at least 80% of the R groups are alkyl group having from 1 to 4 carbon atoms and, more preferably, methyl groups. Also preferred are organosiloxanes in which Y is OH (i.e. a hydroxyl endblocked polydimethylsiloxane).

These organosiloxanes can be produced by known techniques such as by the polymerization of cyclic siloxanes, such as octamethylcyclotetrasiloxane or decamethylcyclopentasiloxane, using catalysts such as bases or alkali metal hydroxydes. Similarly, they can be produced by polycondensation of α,ω silanol end-blocked polydimethylsiloxanes of lower molecular weight as described in chemical textbooks such as Silicon Based Polymer Science from J.M.Zeigler and F.W.Gordon Fearon.

To be effective as antifoams in the present invention, the above organosiloxanes must have a weight-average molecular weight of at least 1,800,000 and a polydispersity not more than 4. We have discovered that this high molecular weight organosiloxane is more efficacious in restricting the formation of foam than lower molecular weight material. Similarly, we have discovered that the polydispersity of the material should be low so that sufficient concentration of the high molecular weight species are present without interference from the low molecular weight species.

The molecular weight as described in the present invention may be measured by known techniques. Preferably, the molecular weight is measured by size-exclusion chromatography using a 2x300mm x7.8mm PL gel column with a mixed bed and toluene as a mobile phase. A refractive index detector is used and calibration is done with polystyrene. A weight normalized distribution (Weight-average molecular weight (Mw)) and polydispersity (P) as ratio of weight-average on number-average molecular weights are reported hereafter.

Mixtures containing various organosiloxanes or organosiloxanes of different molecular weight may be used herein, provided the weight-average molecular weight is at least 1,800,000 and its polydispersity is not more than 4.

Preferred organosiloxane in the foam control composition have a weight-average molecular weight between 1,800,000 and 5,000,000 and polydispersity less than 4.

The organosiloxane is used in the foam control composition at a concentration of at least 0.1 weight percent. Preferably, the organosiloxane is used at a concentration of about 0.1 to about 50 weight percent.

The liquid organic diluents used in the present invention are not critical and can comprise nearly any of the known materials which dilute (dissolve or disperse) the organosiloxane without severely affecting its structure. Such materials are known in the art and many are commercially available. They include, for example, alkanes such as butane, pentane, hexane; alkane halides such as methylene chloride; ethers such as ethyl ether; ketones such as methyl ethyl ketone; aromatic hydrocarbons such as toluene or xylene; and petroleum distillates such as mineral spirit including white spirit. Preferred herein are hydrocarbons and most preferred is white spirit.

Preferred liquid organic diluents for use in the present invention generally have low molecular weights. The most preferred liquid organic diluents have viscosities in the range of 0.5 - 1000 mPa.s at 25°C and most preferably 1-5 mPa.s.

The foam control composition of the present invention is prepared by progressively adding the organosiloxane to the liquid organic diluent, or vice versa. Generally this is accomplished by well known agitation and dilution techniques.

The liquid organic diluent is added to organosiloxane to decrease the viscosity of the foam control composition and, thus, increase its dispersability in the compositions which are to be defoamed. Generally, the organosiloxane is diluted until the composition reaches a viscosity of between about 50 and about 5000 mPa.s at 25°C.

If desired, other materials conventionally added in silicone antifoams such as fillers, colorants, scents and the like can also be added to the antifoams herein.

According to a second aspect of the invention there is provided a method for restricting the formation of foam formed during the separation of gas from a mixture of crude oil and gas comprising adding a foam control composition to a mixture of crude oil and gas before or during said separation, characterised in that said foam control composition comprises at least 0.1% of an organosiloxane in a liquid organic diluent, the organosiloxane having a weight-average molecular weight of at least 1,800,000 and a polydispersity of not more than 4.

According to this second aspect of the invention, the foam control composition as described above is simply dispersed in the mixture of crude oil and gas either prior to or during the process of separating the gas from the crude oil. In this way, the organosiloxane restricts the formation of foam as the gas is disengaged from the crude oil.

The amount of the foam control composition of this invention required will vary depending on the material and process which generates the foam. The precise amount to be used can be determined by one skilled in the art. Generally, this amount can vary over a wide range such as, for example, from about 0.01 ppm to about 10 weight percent of the organosiloxane based on the weight of the material which generates the foam.

This process can be used, for example, at the well head, in gas-oil separators, or in any other location at which foam may be generated because of gas disengagement from crude oil.

There now follows a number of examples to illustrate the invention. In these examples, all parts and percentages are given by weight unless otherwise indicated. All viscosities were measured with a Brookfield Viscometer using cone and plate. The measure is done at a temperature of 25°C.

Antifoam performance was evaluated using a sparge test. This test comprises using 90 ml of crude oil from Sullom Voe terminal in North Sea doped with 10 ml n-hexane. This mixture is poured into the air-inlet of a cylinder which contains an air inlet tube having a gas diffuser fastened to the end. This diffuser is a 25.3 mm diameter spherical gas diffuser stone made of fused crystalline alumina grain. The air inlet tube just touches the bottom of the cylinder and is approximately at the center of the circular cross section.

5-100 microliters of the antifoam composition to be tested is added at the surface of the crude oil mixture.

Air flow into the air inlet tube is started at a rate of 30 liter per hour after introducing the antifoam.

The resultant foam volume percentage is measured in a graduated tube and is recorded versus time during 2 minutes.

The liquid organic diluent used to prepare the foam control compositions is a white spirit sold by EXXON under the trade name Varsol® 60 and has a viscosity of 1.5 mPa.s at 25°C.

### Example 1 :

Foam control composition (A) was prepared by loading 10 parts of an Si-OH end-blocked polydimethylsiloxane having a weight-average molecular weight of 1,900,000 and a polydispersity of 2.3 in 90 parts of white spirit into a 500 cc glass reactor equipped with an electric stirrer. The mixture was stirred under a nitrogen blanket at room temperature until the dispersion became homogeneous. The dispersion is progressively diluted with white spirit to reach a concentration of 0.1% polydimethylsiloxane.

Comparative foam control composition (B) was prepared in the same manner as foam control composition (A) except that the polydimethylsiloxane had a viscosity of 600,000 mPa.s and a weight-average molecular weight of 240,000.

Both compositions (A) and (B) were submitted to the sparge test. The concentration of polydimethylsiloxane in the test is 1 ppm. The results of the sparge test are recorded in Table 1:

**Table 1**

| | Foam Control Composition A | Foam Control Composition B |
|---|---|---|
| time sec | % foam | % foam |
| 10 | 2 | 30 |
| 20 | 2 | 42 |
| 30 | 2 | 58 |
| 40 | 2 | 58 |
| 100 | 2 | 58 |

These tests clearly illustrate that the foam control composition of the present invention is more effective in restricting the formation of foam during separation of gas from a mixture of crude oil and gas than a foam control composition having a lower weight-average molecular weight.

### Example 2 :

In this Example, foam control compositions (C) and (D) were formed in the same manner as Example 1 except that foam control composition (C) used a Si-OH end-blocked polydimethylsiloxane having a weight-average molecular weight of 38,000,000 and a polydispersity of 1.3 and foam control composition (D) used a Si-OH end-blocked polydimethylsiloxane having a weight-average molecular weight of 3,075,000 and a polydispersity 3.9. Foam control composition (B) from Example 1 was again compared to foam control compositions (C) and (D). The results of the sparge test are reported in Table 2:

**Table 2**

| | Foam Control Composition | | |
|---|---|---|---|
| | C | D | B |
| time sec | % foam | % foam | % foam |
| 10 | 2 | 35 | 20 |
| 20 | 3 | 42 | 30 |
| 80 | 20 | 42 | 65 |
| 100 | 20 | 42 | 100 |

These tests also illustrate that the foam control compositions of the invention are more effective in restricting the formation of foam during separation of gas from a mixture of crude oil and gas than a foam control composition with a lower weight-average molecular weight.

### Example 3 :

Foam compositions (C) and (D) from Example 2 were tested in the sparge test described above except that the sparge test used 25 parts hexane and 75 parts crude oil. The results are recorded in Table 3:

**Table 3**

| | Foam Control Composition | | |
|---|---|---|---|
| | C | D | B |
| time sec | % foam | % foam | % foam |
| 5 | 10 | 30 | 50 |
| 10 | 15 | 42 | 85 |
| 20 | 20 | 42 | 100 |

This test illustrates that the foam control compositions of the invention are more effective in restricting the formation of foam during separation of gas from a mixture of crude oil and gas than lower weight-average molecular weight materials even when large amounts of gas are trapped in the crude oil.

It is to be noted that the concept "comprising" where used herein is used in its widest sense to encompass the notions of "include", "comprehend" and "consist of".

## Claims

1. A foam control composition comprising an organosiloxane in a liquid organic diluent, characterized in that the foam control composition contains at least 0.1 weight % of the organosiloxane and the organosiloxane has a weight-average molecular weight of at least 1,800,000 and a polydispersity of not more than 4.

2. A foam control composition according to Claim 1 further characterized in that the organosiloxane has a weight-average molecular weight between 1,800,000 and 5,000,000.

3. A foam control composition according to Claims 1 or 2 further characterized in that said composition comprises between 0.1 and 50 weight % of the organosiloxane.

4. A foam control composition according to any of the previous Claims further characterized in that the liquid organic diluent is a hydrocarbon.

5. A foam control composition according to Claim 4 further characterized in that the hydrocarbon is white spirit.

6. A foam control composition according to any of the previous Claims further characterized in that the liquid organic diluent has a viscosity of from 0.5 to 1000 mPa.s at 25°C.

7. A foam control composition according to any of the previous Claims further characterized in that the viscosity of the foam control composition is between about 50 and about 5000 mPa.s at 25°C.

8. A method for restricting the formation of foam during the separation of gas from a mixture of crude oil and gas comprising adding a foam control composition to a mixture of crude oil and gas before or during said separation, characterised in that said foam control composition comprises at least 0.1% of an organosiloxane in a liquid organic diluent, the organosiloxane having a weight-average molecular weight of at least 1,800,000 and a polydispersity of not more than 4.

9. Use of a composition in accordance with any one of claims 1-7 for the control of foam in gas-oil separators at a well head, or in any other location at which foam may be generated because of gas disengagement from crude oil.
